# EUROPEAN PATENT APPLICATION

(11) **EP 2 072 020 A1**
(43) Date of publication of application: **24.06.2009**
(21) Application number: 07024439.7
(22) Date of filing: 17.12.2007
(51) Int. Cl.: A61C 13/00

(54) **A method of producing a dental ceramic product**

(71) Applicant: Nobel Biocare Services AG, 8058 Zürich-Flughafen (CH)
(72) Inventor: Adilstam, Fredrik, 181 33 Lidingö (SE); Iverhed, Mattias, 741 91 Knivsta (SE)
(74) Representative: Byström, Kurt Linus

(57) **Abstract**

The invention relates to a method of producing a dental ceramic product. In the method, a green body 1 of pressed ceramic powder and containing a binder is subjected to machining such as milling before the green body 1 is sintered. The ceramic powder contains about 2 - 6 % by weight of a binder and the green body 1 has been shaped to a shape corresponding to the shape of at least a part of a tooth to be restored.

## Description

### TECHNICAL FIELD

The invention relates to a method of producing a dental ceramic product. The method may be used in connection with the manufacturing of dental products such as, for example, dental implants, abutments, bridges, inlays or copings.

### BACKGROUND

For the production of a dental prosthesis, it has previously been suggested in US patent application publication 2004/0119180 that a pre-sintered blank is first machined by a milling process and subsequently dense-sintered in a temperature range from 1200 to 1650°C. It is an object of the present invention to provide an improved method for making dental ceramic products.

### BRIEF DESCRIPTION OF THE DRAWINGS

Figure 1 is a schematic representation of how a green body is machined by a tool such as a milling cutter.
Figure 2 is a schematic representation of how two different tools may be used.

### DISCLOSURE OF THE INVENTION

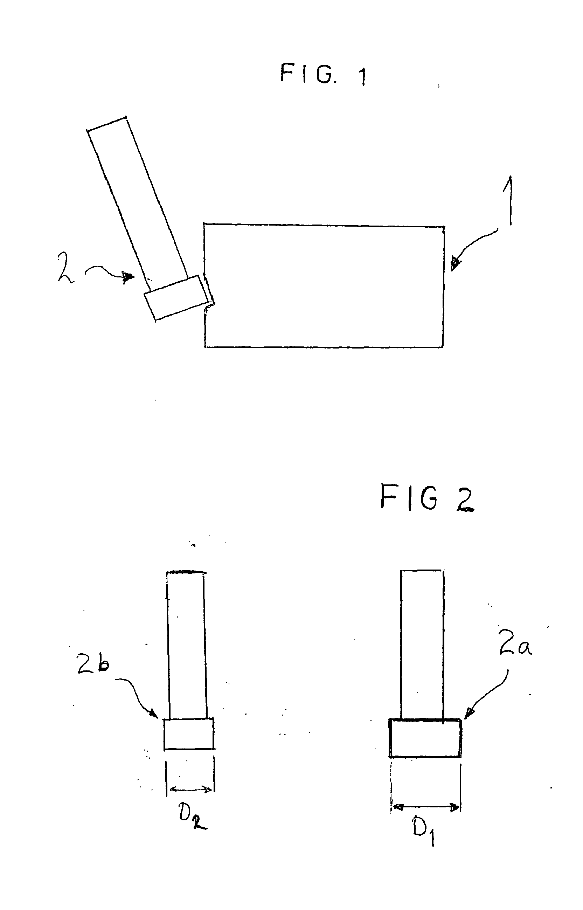

The present application relates to a method of producing dental ceramic products. The method comprises providing a green body 1 that has been obtained by pressing a ceramic powder that contains 2 - 6 % by weight of a binder. With reference to Figure 1, the green body 1 is then shaped to a shape corresponding to the shape of at least a part of a tooth to be restored. The green body is shaped by machining the green body before the green body is subjected to a sintering operation such that the binder still remains in the green body. The machining operation can be made with a tool 2 that may be, for example, a milling cutter 2. The binder used in the green body may be, for example, polyvinyl alcohol (PVA), polyethylene glycol (PEG), polymethyl methacrylate (PMMA) or steric acid (SA).

The green body 1 that has previously been obtained through pressing may suitably have been pressed at a pressure in the range of 180 MPa - 220 MPa but could conceivably also have been pressed at other pressure levels. For example, the pressing may have been performed at pressures up to 300 MPa or even higher. As an example, it can be mentioned that the green body 1 may have been initially formed by pressing a ceramic powder that contains aluminium oxide and the pressure used may lie in the range of 195 MPa - 205 MPa.

The machining of the green body 1 may be performed by milling. Milling of the green body 1 may comprise an initial milling that is performed at a speed of 8000 rev/min - 16000 rev/min and at a rate of advance from 1600 m/min - 3000 m/min. For the initial milling, the speed of the milling may be, for example 9000 rev/min - 1500 rev/min or 1000 rev/min - 1400 rev/min while the rate of advance may be, for example 1850 m/min - 2800 m/min or 1900 m/min - 2300 m/min. such that, for example, the speed range of 9000 rev/min - 1500 rev/min corresponds to a rate of advance in the range of 1850 m/min - 2800 m/min.

The initial milling may then be followed by a secondary milling that is performed at a speed of 12000 rev/min - 22000 rev/min and at a rate of advance from 1600 m/min - 3000 m/min. For example, suitable values for speed during the secondary milling may lie in the range of 13000 rev/min - 2000 rev/min or in the narrower range of 14000 rev/min - 18000 rev/min. The rate of advance may lie, for example, in the range of 1800 m/min - 2800 m/min or in the narrower range of 1900 m/min - 2400 m/min. It should be understood that the narrowing ranges for speed correspond to narrowing ranges for the rate of advance.

The secondary milling may be followed by a third milling performed at a speed of 16000 rev/min - 30000 rev/min and at a rate of advance of 2400 m/min - 3700 m/min. For example, suitable values for speed during the third milling may line in the range of 18000 rev/min - 2600 rev/min at a rate of advance in the range of 2600 m/min - 3500 m/min. The speed may also be chosen in the narrower ranges of 2000 rev/min - 2400 rev/min at a rate of advance in the range of 2800 m/min - 3300 m/min.

After the third milling, the green body 1 may be subjected to a final milling that is performed at a speed of 22000 rev/min - 35000 rev/min and at a rate of advance of 2400 m/min and 3700 m/min. For example, the speed of the milling may be in the range of 24000 rev/min - 31000 rev/min at a rate of advance in the range of 2600 m/min - 3500 m/min or the speed of the milling may be in the range of 25000 rev/min at a rate of advance in the range of 2800 m/min - 3300 m/min.

The initial milling can be made with a first milling cutter 2 having a diameter in the range of 4 - 8 mm or 4 mm - 6mm. The secondary milling may be performed with a milling cutter 2 having a diameter that is smaller than that of the first milling cutter. For example, the secondary milling cutter 2 may have a diameter of 2 mm - 3 mm. The final milling may be performed with a milling cutter 2 having a diameter of about 1 mm.

The speeds given above and the values indicated for the milling cutters 2 have been found to give good results but other values are also possible.

Generally speaking, the milling performed may comprise at least two steps, i.e. at least an initial milling and at least a final milling. Reference is now made to Figure 2. During the initial milling, a milling cutter 2a with a larger diameter D₁ may be used and a milling cutter 2b with a smaller diameter D₂ may be used during the final milling. It should thus be understood that, in Figure 2, D₁ > D₂. The reason is that, during the initial milling, it is more important to remove unwanted material as quickly as possible. During the final milling, less material remains to be removed but the final milling is more important for the surface properties of the green body 1 (i.e. how even it becomes). For this reason, a milling cutter 2b with smaller diameter can be used during final milling. Normally (but not necessarily), the final milling is also performed at a higher speed than the initial milling. The reason is that the higher speed is more suitable during the final milling when a very even surface is to be obtained. It can be added that it is possible to use only one milling cutter 2 and one single speed during the entire milling (i.e. the machining would comprise only one single milling). However, such a procedure would be more time-consuming and less cost-effective.

### EXAMPLE

A dental bridge was manufactured from a ceramic powder based on aluminium oxide and containing 3% by weight of a binder. In this case, the binder was PVA but it would of course have been possible to use another binder. A blank (i.e. a green body) was formed by cold isostatic pressing at a pressure of 200 MPa. An initial milling operation was performed with a milling cutter 2 having a diameter of 5 mm. The speed of the milling cutter 2 was 10500 rev/min and the rate of advance was 1900 m/min. The secondary milling was performed with a milling cutter 2 having a diameter of 2 mm and at a speed of 15500 rev/min and a rate of advance of 1950 m/min.

After this, the blank (i.e. the green body 1) was subjected to one more milling operation that was performed with a milling cutter 2 having a diameter of 1 mm. This milling operation was performed at a speed of 2600 rev/min at a rate of advance of 2900 m/min.

The surface of the green body 1 was then compared to the surface of a blank that had first been subjected to a pre-sintering treatment and then to milling. The comparison showed that the surface of the green body 1 that had been subjected to milling was visibly more even than the surface of the blank that had first been pre-sintered and then subjected to milling.

According to the present invention, the green body 1 is first subjected to machining and after this, it may be subjected to sintering.

When the green body 1 is subjected to machining while it still contains a binder, the green body 1 will not break so easily even though the machining is performed at high speeds that also allow a rational and cost-effective production. Additionally, the tools used will not wear out as quickly as when a sintered body is subjected to machining.

The ceramic powder used for the green body 1 may be, for example, aluminium oxide or zirconium oxide.

It is envisaged that, in practice, the machining method used will usually be milling but machining could also be performed by, for example, drilling or turning. It is also possible that different machining methods are combined. For example, the green body 1 could be subjected to both milling and drilling.

During sintering, the binder in the ceramic material evaporates such that the binder can no longer contribute to holding the powder material together. For this reason, sintering should be performed after machining. This does not necessarily exclude that the green body 1 is subjected to some heating before the machining operation. However, such heating may not be so extensive that the binder disappears from the ceramic material since the ceramic material should contain 2 - 6 % by weight of the binder.

## Claims

1. A method of producing a dental ceramic product, the method comprising: providing a green body (1) that has been obtained by pressing a ceramic powder, the ceramic powder containing a binder; shaping the green body (1) to a shape corresponding to the shape of at least a part of a tooth to be restored by machining the green body (1) before the green body is subjected to a sintering operation such that the binder still remains in the green body (1) while the green body (1) is being machined.

2. A method according to claim 1, wherein the machining is performed by milling and wherein the milling comprises at least an initial milling and a final milling and wherein the final milling is performed at a higher speed than the initial milling.

3. A method according to claim 1 or claim 2, wherein the machining is performed by milling and wherein the milling comprises at least an initial milling and a final milling and wherein a milling cutter (2) is used in the first milling and a milling cutter (2) is used in the final milling and wherein the milling cutter (2) used in the final milling has a smaller diameter than the milling cutter (2) used in the initial milling.

4. A method according to any of the previous claims, wherein the machining is performed by milling and where the milling comprises:
a. an initial milling that is performed at a speed of 8000 rev/min - 16000 rev/min and at a rate of advance from 1600 m/min - 3000 m/min,
b. a secondary milling performed at a speed of 12000 rev/min - 22000 rev/min and at a rate of advance from 1600 m/min - 3000 m/min,
c. a third milling performed at a speed of 16000 rev/min - 30000 rev/min and at a rate of advance of 2400 m/min - 3700 m/min, and
d. final milling performed at a speed of 22000 rev/min - 35000 rev/min and at a rate of advance of 2400 m/min and 3700 m/min.

5. A method according to claim 4, wherein the initial milling is made with a first milling cutter (2) having a diameter in the range of 4 - 8 mm and the secondary milling with a milling cutter (2) having a diameter that is smaller than that of the first milling cutter (2).

6. A method according to claim 5, wherein the initial milling is made with a milling cutter (2) having a diameter of 4mm - 6 mm, the secondary milling with a milling cutter (2) having a diameter of 2mm- 3mm and the final milling with a milling cutter (2) having a diameter of about 1 mm.

7. A method according to any of the previous claims, wherein said providing the green body (1) that has been obtained by pressing a ceramic powder comprises providing a green body (1) that has been obtained by pressing a ceramic powder, the ceramic powder containing 2 - 6 % by weight of a binder.
